# EUROPEAN PATENT APPLICATION

(11) **EP 4 761 338 A1**
(43) Date of publication of application: **17.06.2026**
(21) Application number: 24853601.3
(22) Date of filing: 06.08.2024
(51) Int. Cl.: H04W 24/08

(54) **METHOD FOR DETERMINING MEASUREMENT GAP, TERMINAL, NETWORK SIDE DEVICE, AND READABLE STORAGE MEDIUM**

(30) Priority: 11.08.2023 CN 202311015683
(71) Applicant: Vivo Mobile Communication Co., Ltd., Dongguan, Guangdong 523863 (CN)
(72) Inventor: WEI, Xusheng, Dongguan, Guangdong 523863 (CN); YANG, Xiaodong, Dongguan, Guangdong 523863 (CN); LIU, Xuanbing, Dongguan, Guangdong 523863 (CN)
(74) Representative: dompatent
(86) International application number: PCT/CN2024/109943
(87) International publication number: WO 2025/036190

(57) **Abstract**

The present application belongs to the technical field of wireless communication, and discloses a method for determining a measurement gap, a terminal, a network side device, and a readable storage medium. The method for determining a measurement gap in embodiments of the present application comprises: when a time domain conflict occurs between measurement gaps of a terminal having different characteristics, determining, on the basis of a first conflict resolution solution, a measurement gap to be reserved or to be discarded among the measurement gaps of the terminal having different characteristics. The first conflict resolution solution is: on the basis of the priorities of measurement gaps, determining a measurement gap to be reserved or to be discarded among measurement gaps in which a time domain conflict has occurred.

## Description

### CROSS-REFERENCE TO RELATED APPLICATIONS

This application claims priority to Chinese Patent Application No. 202311015683.3, filed in China on August 11, 2023, which is incorporated herein by reference in its entirety.

### TECHNICAL FIELD

This application belongs to the field of wireless communication technologies, and in particular, relates to a measurement gap determining method, a terminal, a network side device, and a readable storage medium.

### BACKGROUND

A radio resource management (RRM) consistency test mainly tests whether user equipment (User Equipment, UE) (also referred to as a terminal) meets a minimum requirement defined by a standard in terms of performance. The consistency test is of great significance to ensure interconnection and intercommunication of networks and user experience of the terminal. RRM measurement includes inter-frequency (inter-frequency) measurement and inter-system (Inter-Radio Access Technology, inter-RAT) measurement. Since frequencies of inter-frequency and inter-RAT are different from those of a serving cell, it is impossible to complete both signal sending and receiving with the serving cell and inter-frequency measurement. Therefore, when a radio frequency path of the terminal is limited, a measurement gap needs to be introduced for measurement. During the measurement gap, the terminal does not perform signal sending and receiving with the serving cell, but measures the frequencies of inter-frequency or inter-RAT by using the radio frequency path.

In a 5^{th} generation (5^{th} Generation, 5G) communication system, a network separately configures measurement gaps for a plurality of different features (features) of the terminal. When the measurement gaps configured for different features conflict in time domain, a corresponding conflict resolution is needed.

### SUMMARY

Embodiments of this application provide a measurement gap determining method, a terminal, a network side device, and a readable storage medium, to resolve a problem of how to resolve a time domain conflict between measurement gaps for different features of the terminal.

According to a first aspect, a measurement gap determining method is provided, including:
a terminal determines a to-be-retained or to-be-discarded measurement gap in measurement gaps for different features of the terminal based on a first conflict resolution in a case in which the measurement gaps for different features of the terminal conflict in time domain.

The first conflict resolution is determining, based on priorities of the measurement gaps, the to-be-retained or to-be-discarded measurement gap in the measurement gaps that conflict in time domain.

According to a second aspect, a measurement gap determining method is provided, including:
a network side device determines a to-be-retained or to-be-discarded measurement gap in measurement gaps for different features of a terminal based on a first conflict resolution in a case in which the measurement gaps for different features of the terminal conflict in time domain.

The first conflict resolution is determining, based on priorities of the measurement gaps, the to-be-retained or to-be-discarded measurement gap in the measurement gaps that conflict in time domain.

According to a third aspect, a measurement gap determining apparatus is provided, including:
a first determining module, configured to determine a to-be-retained or to-be-discarded measurement gap in measurement gaps for different features of a terminal based on a first conflict resolution in a case in which the measurement gaps for different features of the terminal conflict in time domain.

The first conflict resolution is determining, based on priorities of the measurement gaps, the to-be-retained or to-be-discarded measurement gap in the measurement gaps that conflict in time domain.

According to a fourth aspect, a terminal is provided. The terminal includes a processor and a memory. The memory stores a program or instructions executable on the processor. When the program or instructions are executed by the processor, the steps of the method according to the first aspect are implemented.

According to a fifth aspect, a terminal is provided, including a processor and a communication interface. The processor is configured to determine a to-be-retained or to-be-discarded measurement gap in measurement gaps for different features of the terminal based on a first conflict resolution in a case in which the measurement gaps for different features of the terminal conflict in time domain, where the first conflict resolution is determining, based on priorities of the measurement gaps, the to-be-retained or to-be-discarded measurement gap in the measurement gaps that conflict in time domain.

According to a sixth aspect, a network side device is provided. The network side device includes a processor and a memory. The memory stores a program or instructions executable on the processor. When the program or instructions are executed by the processor, the steps of the method according to the second aspect are implemented.

According to a seventh aspect, a network side device is provided, including a processor and a communication interface. The processor is configured to determine a to-be-retained or to-be-discarded measurement gap in measurement gaps for different features of a terminal based on a first conflict resolution in a case in which the measurement gaps for different features of the terminal conflict in time domain, where the first conflict resolution is determining, based on priorities of the measurement gaps, the to-be-retained or to-be-discarded measurement gap in the measurement gaps that conflict in time domain.

According to an eighth aspect, a readable storage medium is provided. The readable storage medium stores a program or instructions. When the program or instructions are executed by a processor, the steps of the method according to the first aspect or the steps of the method according to the second aspect are implemented.

According to a ninth aspect, a wireless communication system is provided, including a terminal and a network side device. The terminal may be configured to perform the steps of the method according to the first aspect. The network side device may be configured to perform the steps of the method according to the second aspect.

According to a tenth aspect, a chip is provided. The chip includes a processor and a communication interface. The communication interface is coupled to the processor. The processor is configured to run a program or instructions to implement the method according to the first aspect or the method according to the second aspect.

According to an eleventh aspect, a computer program/program product is provided. The computer program/program product is stored in a storage medium. The computer program/program product is executed by at least one processor to implement the steps of the method according to the first aspect or the second aspect.

In embodiments of this application, in the case in which the measurement gaps for different features of the terminal conflict in time domain, the terminal and the network side device determine, based on a same conflict resolution (based on the priorities of the measurement gaps), the to-be-retained or to-be-discarded measurement gap in the measurement gaps for different features that conflict in time domain. This can ensure that a network side and the terminal have a consistent understanding of a measurement gap conflict processing method, ensuring that the network side and the terminal have a consistent understanding of an applicable measurement performance indicator.

### BRIEF DESCRIPTION OF THE DRAWINGS

FIG. 1 is a block diagram of a wireless communication system to which embodiments of this application may be applied;
FIG. 2 is a schematic flowchart of a measurement gap determining method applied to a terminal according to an embodiment of this application;
FIG. 3 is a schematic flowchart of a measurement gap determining method applied to a network side device according to an embodiment of this application;
FIG. 4 is a first diagram in which measurement gaps for different features do not conflict in time domain according to an embodiment of this application;
FIG. 5 is a first diagram in which measurement gaps for different features conflict in time domain according to an embodiment of this application;
FIG. 6 is a second diagram in which measurement gaps for different features do not conflict in time domain according to an embodiment of this application;
FIG. 7 is a second diagram in which measurement gaps for different features conflict in time domain according to an embodiment of this application;
FIG. 8 is a first diagram of a structure of a measurement gap determining apparatus according to an embodiment of this application;
FIG. 9 is a second diagram of a structure of a measurement gap determining apparatus according to an embodiment of this application;
FIG. 10 is a diagram of a structure of a communication device according to an embodiment of this application;
FIG. 11 is a diagram of a hardware structure of a terminal according to an embodiment of this application; and
FIG. 12 is a diagram of a hardware structure of a network side device according to an embodiment of this application.

### DETAILED DESCRIPTION

The following clearly describes the technical solutions in embodiments of this application with reference to the accompanying drawings in embodiments of this application. Apparently, the described embodiments are some but not all of embodiments of this application. All other embodiments obtained by a person of ordinary skill in the art based on embodiments of this application fall within the protection scope of this application.

The terms "first", "second", and the like in this application are used to distinguish between similar objects instead of describing a specific order or sequence. It should be understood that the terms used in such a way are interchangeable in appropriate circumstances, so that embodiments of this application can be implemented in other orders than the order illustrated or described herein. Moreover, the objects distinguished by "first" and "second" are usually of one type, and the number of objects is not limited. For example, there may be one or more first objects. In addition, "or" in this application indicates at least one of connected objects. For example, "A or B" covers three solutions, that is, Solution 1: including A and excluding B; Solution 2: including B and excluding A; and Solution 3: including both A and B. The character "/" in this specification generally indicates an "or" relationship between the associated objects.

The term "indication" in this application may be a direct indication (or in other words, an explicit indication), or may be an indirect indication (or in other words, an implicit indication). The direct indication may be understood as that a sending party clearly informs a receiving party of content such as specific information, an operation that needs to be performed, or a request result in a sent indication. The indirect indication may be understood as that according to the indication sent by the sending party, the receiving party determines the corresponding information, or performs judgment and determines, based on a judgment result, the operation that needs to be performed, the request result, or the like.

It should be noted that a technology described in embodiments of this application may be applied to a long term evolution (Long Term Evolution, LTE)/LTE-advanced (LTE-Advanced, LTE-A) system, and may be further applied to another wireless communication system, for example, a code division multiple access (Code Division Multiple Access, CDMA) system, a time division multiple access (Time Division Multiple Access, TDMA) system, a frequency division multiple access (Frequency Division Multiple Access, FDMA) system, an orthogonal frequency division multiple access (Orthogonal Frequency Division Multiple Access, OFDMA) system, a single-carrier frequency division multiple access (Single-carrier Frequency Division Multiple Access, SC-FDMA) system, or another system. The terms "system" and "network" in embodiments of this application are often used interchangeably, and the described technology may be used in the above-mentioned systems and radio technologies as well as other systems and radio technologies. A new radio (New Radio, NR) system is described below as an example, and the term NR is used in most of the following descriptions. Nevertheless, the technologies may also be applied to a system other than the NR system, for example, a 6^{th} generation (6^{th} Generation, 6G) communication system.

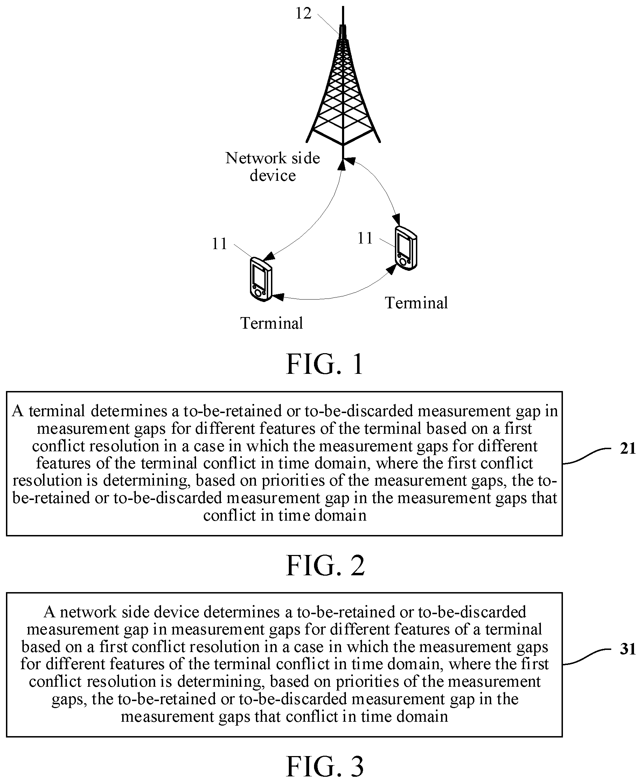

FIG. 1 is a block diagram of a wireless communication system to which embodiments of this application may be applied. The wireless communication system includes a terminal 11 and a network side device 12. The terminal 11 may be a terminal side device such as a mobile phone, a tablet computer (Tablet Personal Computer), a laptop computer (Laptop Computer), a notebook computer, a personal digital assistant (Personal Digital Assistant, PDA), a palmtop computer, a netbook, an ultra-mobile personal computer (Ultra-mobile Personal Computer, UMPC), a mobile internet device (Mobile Internet Device, MID), an augmented reality (Augmented Reality, AR)/virtual reality (Virtual Reality, VR) device, a robot, a wearable device (Wearable Device), a flight vehicle (flight vehicle), a vehicle-mounted device (Vehicle User Equipment, VUE), a shipborne device, a pedestrian terminal (Pedestrian User Equipment, PUE), a smart home (a home device with a wireless communication function, for example, a refrigerator, a television, a washing machine, or furniture), a game console, a personal computer (Personal Computer, PC), a teller machine, or a self-service machine. The wearable device includes a smartwatch, a smart band, a smart headset, smart glasses, a smart jewelry (a smart bracelet, a smart chain bracelet, a smart ring, a smart necklace, a smart ankle bangle, a smart ankle chain, and the like), a smart wristband, smart clothing, and the like. The vehicle-mounted device may also be referred to as a vehicle-mounted terminal, a vehicle-mounted controller, a vehicle-mounted module, a vehicle-mounted component, a vehicle-mounted chip, a vehicle-mounted unit, or the like. It should be noted that a specific type of the terminal 11 is not limited in embodiments of this application. The network side device 12 may include an access network device or a core network device. The access network device may also be referred to as a radio access network (Radio Access Network, RAN) device, a radio access network function, or a radio access network unit. The access network device may include a base station, a wireless local area network (Wireless Local Area Network, WLAN) access point (Access Point, AP), a wireless fidelity (Wireless Fidelity, Wi-Fi) node, or the like. The base station may be referred to as a NodeB (NodeB, NB), an evolved NodeB (Evolved NodeB, eNB), a next generation NodeB (next generation NodeB, gNB), a new radio NodeB (New Radio NodeB, NR NodeB), an access point, a relay station (Relay Base Station, RBS), a serving base station (Serving Base Station, SBS), a base transceiver station (Base Transceiver Station, BTS), a radio base station, a radio transceiver, a basic service set (Basic Service Set, BSS), an extended service set (Extended Service Set, ESS), a home NodeB (home NodeB, HNB), a home evolved NodeB (home evolved NodeB), a transmission reception point (Transmission Reception Point, TRP), or another suitable term in the field. As long as the same technical effects are achieved, the base station is not limited to a specific technical term. It should be noted that in embodiments of this application, the base station in the NR system is used merely as an example for description, and a specific type of the base station is not limited.

The following describes in detail a measurement gap determining method, a terminal, a network side device, and a readable storage medium provided in embodiments of this application through some embodiments and application scenarios thereof with reference to the accompanying drawings.

Refer to FIG. 2. An embodiment of this application provides a measurement gap determining method, including the following step.

Step 21: A terminal determines a to-be-retained or to-be-discarded measurement gap in measurement gaps for different features of the terminal based on a first conflict resolution in a case in which the measurement gaps for different features of the terminal conflict in time domain, where the first conflict resolution is determining, based on priorities of the measurement gaps, the to-be-retained or to-be-discarded measurement gap in the measurement gaps that conflict in time domain. In this embodiment of this application, the first conflict resolution may also be a priority-based resolution.

According to this embodiment of this application, in the case in which the measurement gaps for different features of the terminal conflict in time domain, the to-be-retained or to-be-discarded measurement gap in the measurement gaps that conflict in time domain is determined based on the priorities of the measurement gaps, so that the terminal can determine which measurement gap to retain and which measurement gap to discard.

In this embodiment of this application, the terminal may have a plurality of features. The feature may also be expressed as a function (functionality), a measurement feature, or a measurement function. The feature may include at least one of the following: measurement on a serving cell, measurement on a neighboring cell, measurement on a multi-universal subscriber identity module (Multi-Universal Subscriber Identity Module, MUSIM), measurement on a non-terrestrial network (Non-Terrestrial Network, NTN), measurement on positioning information, measurement on a channel state information-reference signal (Channel State Information Reference Signal, CSI-RS), and the like.

In this embodiment of this application, a network side may separately configure measurement gaps for a plurality of different features of the terminal, that is, configure patterns (patterns) of the measurement gaps. Optionally, patterns of measurement gaps for the features are different.

In this embodiment of this application, optionally, the network side may further separately configure priorities for the measurement gaps for different features. Optionally, priorities of measurement gaps for the features are also different.

In this embodiment of this application, optionally, determining, based on the priorities of the measurement gaps, the to-be-retained or to-be-discarded measurement gap in the measurement gaps that conflict in time domain includes: for a plurality of measurement gaps that conflict in time domain, retaining a measurement gap with a highest priority, or discarding a measurement gap other than a measurement gap with a highest priority. For example, a measurement gap (gap) 1 is configured for the NTN of the terminal, a measurement gap (gap) 2 is configured for the MUSIM of the terminal, and a measurement gap (gap) 3 is configured for the positioning information. In a case in which the gap 1, the gap 2, and the gap 3 conflict in time domain, if a priority of the gap 1 is higher than those of the gap 2 and the gap 3, the gap 1 is retained, and the gap 2 and the gap 3 are discarded; if a priority of the gap 2 is higher than those of the gap 1 and the gap 3, the gap 2 is retained, and the gap 1 and the gap 3 are discarded; or if a priority of the gap 3 is higher than those of the gap 1 and the gap 2, the gap 3 is retained, and the gap 1 and the gap 2 are discarded.

In this embodiment of this application, optionally, a network side device may configure a behavior (determining, based on the priorities of the measurement gaps, the to-be-retained or to-be-discarded measurement gap in the measurement gaps that conflict in time domain) performed by the terminal in the case in which the measurement gaps for different features conflict in time domain.

In this embodiment of this application, optionally, a protocol may agree on a behavior (determining, based on the priorities of the measurement gaps, the to-be-retained or to-be-discarded measurement gap in the measurement gaps that conflict in time domain) performed by the terminal in the case in which the measurement gaps for different features conflict in time domain.

According to this embodiment of this application, in the case in which the measurement gaps for different features of the terminal conflict in time domain, the terminal and the network side device determine, based on a same conflict resolution (based on the priorities of the measurement gaps), the to-be-retained or to-be-discarded measurement gap in the measurement gaps for different features that conflict in time domain. This can ensure that the network side and the terminal have a consistent understanding of a measurement gap conflict processing method, ensuring that the network side and the terminal have a consistent understanding of an applicable measurement performance indicator.

In this embodiment of this application, the plurality of features of the terminal may include a target feature. The target feature may include a plurality of measurement gaps, and the target feature is a part or all of the plurality of features of the terminal. Different measurement gaps for the target feature may have respective priorities. Optionally, priorities of the plurality of measurement gaps for the target feature may all be different, or may be at least partially the same.

In this embodiment of this application, when the plurality of measurement gaps for the target feature all conflict in time domain with a measurement gap for another feature, the plurality of measurement gaps for the target feature participates in priority comparison. For example, the measurement gap (gap) 1 is configured for the NTN of the terminal, and the measurement gap (gap) 2 and the measurement gap (gap) 3 are configured for the MUSIM (that is, the target feature) of the terminal. In the case in which the gap 1, the gap 2, and the gap 3 conflict in time domain, if the priority of the gap 1 is higher than those of the gap 2 and the gap 3, the gap 1 is retained, and the gap 2 and the gap 3 are discarded; if the priority of the gap 2 is higher than those of the gap 1 and the gap 3, the gap 2 is retained, and the gap 1 and the gap 3 are discarded; or if the priority of the gap 3 is higher than those of the gap 1 and the gap 2, the gap 3 is retained, and the gap 1 and the gap 2 are discarded.

In this embodiment of this application, in a case in which the first conflict resolution is configured for the measurement gaps for different features, a conflict resolution may also be configured for different measurement gaps for the target feature. In this case, how to use the conflict resolution configured for different measurement gaps for the target feature is a problem that needs to be resolved.

In this embodiment of this application, optionally, the measurement gap determining method further includes: The terminal determines the to-be-retained or to-be-discarded measurement gap in different measurement gaps for the target feature based on the first conflict resolution or a second conflict resolution in a case in which the measurement gaps for different features of the terminal do not conflict in time domain but different measurement gaps for the target feature conflict in time domain, where the target feature is a part or all of the features of the terminal.

In some embodiments of this application, optionally, the second conflict resolution may be: in a case in which different measurement gaps for the target feature conflict in time domain, retaining different measurement gaps for the target feature that conflict in time domain. The second conflict resolution may alternatively be expressed as a coexistence-based resolution.

In some embodiments of this application, optionally, that the terminal determines the to-be-retained or to-be-discarded measurement gap in the measurement gaps for different features of the terminal based on the first conflict resolution in the case in which the measurement gaps for different features of the terminal conflict in time domain includes: If different measurement gaps for the target feature of the terminal are configured to use a second conflict resolution, the terminal ignores the second conflict resolution configured for different measurement gaps for the target feature. Ignoring the second conflict resolution configured for different measurement gaps for the target feature may alternatively be expressed as: covering the second conflict resolution configured for different measurement gaps for the target feature, or assuming/considering that the second conflict resolution configured for different measurement gaps for the target feature is ineffective.

For example, the measurement gap (gap) 1 is configured for the NTN of the terminal, the measurement gap (gap) 2 and the measurement gap (gap) 3 are configured for the MUSIM (that is, the target feature) of the terminal, and the coexistence-based resolution is configured for the gap 2 and the gap 3 for the MUSIM. In the case in which the gap 1, the gap 2, and the gap 3 conflict in time domain, the coexistence-based resolution configured for the gap 2 and the gap 3 for the MUSIM is ignored, and if the priority of the gap 1 is higher than those of the gap 2 and the gap 3, the gap 1 is retained, and the gap 2 and the gap 3 are discarded; or if the priority of the gap 2 is higher than those of the gap 1 and the gap 3, the gap 2 is retained based on the priority-based resolution, the coexistence-based resolution configured for the gap 2 and the gap 3 for the MUSIM is ignored, and the gap 1 and the gap 3 are discarded.

In some other embodiments of this application, optionally, if different measurement gaps for the target feature of the terminal are configured to use a second conflict resolution, the terminal assumes that the second conflict resolution configured for different measurement gaps for the target feature is effective.

For example, the measurement gap (gap) 1 is configured for measurement (for example, measurement on the serving cell or measurement on the neighboring cell) or the NTN of the terminal, the measurement gap (gap) 2 and the measurement gap (gap) 3 are configured for the MUSIM (that is, the target feature) of the terminal, and the coexistence-based resolution is configured for the gap 2 and the gap 3 for the MUSIM. In the case in which the gap 1, the gap 2, and the gap 3 conflict in time domain, the coexistence-based resolution configured for the gap 2 and the gap 3 for the MUSIM is effective, and if the priority of the gap 1 is higher than those of the gap 2 and the gap 3, the gap 1 is retained, and the gap 2 and the gap 3 are discarded (in this case, the coexistence-based resolution is effective but is not used); if the priority of the gap 2 is higher than those of the gap 1 and the gap 3, the gap 2 and the gap 3 are retained (the coexistence-based resolution is used), and the gap 1 is discarded; or if the priority of the gap 3 is higher than those of the gap 1 and the gap 2, the gap 2 and the gap 3 are retained (the coexistence-based resolution is used), and the gap 1 is discarded.

In this embodiment of this application, optionally, if the terminal assumes that the second conflict resolution configured for different measurement gaps for the target feature is effective, the method further includes:
if priorities of different measurement gaps for the target feature are different, and a priority of at least one measurement gap for the target feature is a highest priority, determining the to-be-retained or to-be-discarded measurement gap in different measurement gaps for the target feature based on the second conflict resolution; or
if priorities of different measurement gaps for the target feature are the same, and the priorities of the measurement gaps for the target feature are a highest priority, determining the to-be-retained or to-be-discarded measurement gap in different measurement gaps for the target feature based on the second conflict resolution; or
if priorities of all measurement gaps for the target feature are not a highest priority, discarding or skipping retaining all the measurement gaps for the target feature.

In other words, only when the priority of the at least one measurement gap for the target feature is the highest priority, the second conflict resolution is used to determine the to-be-retained or to-be-discarded measurement gap in different measurement gaps for the target feature.

An example in which the second conflict resolution is a coexistence-based resolution is used for description.

Optionally, if the terminal assumes that the coexistence-based resolution configured for different measurement gaps for the target feature is effective, the method further includes:
if the priorities of different measurement gaps for the target feature are different, and the priority of the at least one measurement gap for the target feature is the highest priority, determining, based on the coexistence-based resolution, to retain all different measurement gaps for the target feature; or
if the priorities of different measurement gaps for the target feature are the same, and the priorities of the measurement gaps for the target feature are the highest priority, determining, based on the coexistence-based resolution, to retain different measurement gaps for the target feature; or
if the priorities of all the measurement gaps for the target feature are not the highest priority, discarding all the measurement gaps for the target feature.

In this embodiment of this application, optionally, the measurement gap determining method further includes: The terminal determines the conflict resolution used for different measurement gaps for the target feature, where the conflict resolution is the first conflict resolution or the second conflict resolution.

In some embodiments of this application, optionally, that the terminal determines the conflict resolution used for different measurement gaps for the target feature includes: The terminal determines, based on a target capability of the terminal, the conflict resolution used for the target feature. The target capability may be some terminal capabilities in a related technology, for example, a processing capability of the terminal, or may be a capability specifically defined for a conflict resolution, for example, a capability of supporting the coexistence-based resolution.

In some embodiments, optionally, the terminal receives first indication information sent by the network side device, where the first indication information indicates the conflict resolution used for different measurement gaps for the target feature, and the conflict resolution used for different measurement gaps for the target feature is determined by the network side device based on a target capability of the terminal. The terminal determines, based on the first indication information, the conflict resolution used for the target feature. In this embodiment of this application, optionally, different identifiers may be used in the first indication information to indicate use of different conflict resolutions. For example, an indication 0 indicates use of the priority-based resolution, and an indication 1 indicates use of the coexistence-based resolution. Alternatively, different identifiers may be used to indicate whether to use a conflict resolution. For example, 0 indicates to use the coexistence-based resolution, and 1 indicates not to use a functional resolution. Optionally, before the terminal receives the first indication information sent by the network side device, the method further includes: The terminal reports capability indication information, where the capability indication information includes indication information indicating whether the terminal has a target capability.

In some embodiments of this application, optionally, the terminal receives configuration information sent by the network side device, where the configuration information indicates the conflict resolution configured by the network side device for different measurement gaps for the target feature of the terminal. The terminal determines, based on the configuration information, the conflict resolution used for the target feature. The configuration information may be one bit (bit) or several bits.

In some embodiments of this application, optionally, if different measurement gaps for the target feature have a same priority, the terminal determines to use the second conflict resolution for different measurement gaps for the target feature. In other words, whether to use the second conflict resolution for different measurement gaps for the target feature depends on whether different measurement gaps for the target feature have the same priority. If different measurement gaps for the target feature have the same priority, the terminal determines to use the second conflict resolution for different measurement gaps for the target feature; or if different measurement gaps for the target feature do not have the same priority, the terminal determines not to use the second conflict resolution for different measurement gaps for the target feature.

In this embodiment, optionally, determining, based on whether the priorities of different measurement gaps for the target feature are the same, whether to use the second conflict resolution for different measurement gaps for the target feature is applicable to an embodiment in which the terminal assumes that the second conflict resolution configured for different measurement gaps for the target feature is effective.

For example, in an embodiment, different measurement gaps for the target feature have the same priority. In this case, the terminal determines to use the coexistence-based resolution for different measurement gaps for the target feature. If the priorities of the measurement gaps for the target feature are the highest priority, the terminal determines, based on the coexistence-based resolution, to retain different measurement gaps for the target feature; or if the priorities of all the measurement gaps for the target feature are not the highest priority, the terminal discards all the measurement gaps for the target feature.

In some embodiments of this application, optionally, the measurement gap determining method further includes: The terminal reports second indication information, where the second indication information indicates a conflict resolution suggested by the terminal to be used for different measurement gaps for the target feature. The second indication information may be one bit or several bits. In this embodiment of this application, optionally, different identifiers may be used in the second indication information to indicate different conflict resolutions suggested. For example, an indication 0 indicates that the priority-based resolution is suggested to be used, and an indication 1 indicates the coexistence-based resolution is suggested to be used. Alternatively, different identifiers may be used to indicate whether to a conflict resolution is suggested to be used. For example, 0 indicates that the coexistence-based resolution is suggested to be used, and 1 indicates that a functional resolution is suggested not to be used. Optionally, the terminal may report the second indication information when applying for a measurement gap for the target feature (for example, the MUSIM). In this embodiment of this application, an identification symbol or an identification bit or an indication symbol or an indication bit may be added to signaling in the related technology, to carry the second indication information. In some embodiments, the network side device may configure, for the terminal based on a suggestion of the terminal, the conflict resolution configured for different measurement gaps for the target feature.

Refer to FIG. 3. An embodiment of this application provides a measurement gap determining method, including the following step.

Step 31: A network side device determines a to-be-retained or to-be-discarded measurement gap in measurement gaps for different features of a terminal based on a first conflict resolution in a case in which the measurement gaps for different features of the terminal conflict in time domain.

The first conflict resolution is determining, based on priorities of the measurement gaps, the to-be-retained or to-be-discarded measurement gap in the measurement gaps that conflict in time domain.

According to this embodiment of this application, in the case in which the measurement gaps for different features of the terminal conflict in time domain, the to-be-retained or to-be-discarded measurement gap in the measurement gaps that conflict in time domain is determined based on the priorities of the measurement gaps, so that a network side can determine which measurement gap to retain and which measurement gap to discard.

In this embodiment of this application, optionally, the measurement gap determining method further includes: The network side device determines the to-be-retained or to-be-discarded measurement gap in different measurement gaps for the target feature based on the first conflict resolution or a second conflict resolution in a case in which the measurement gaps for different features of the terminal do not conflict in time domain but different measurement gaps for the target feature conflict in time domain, where the target feature is a part or all of features of the terminal.

In some embodiments of this application, optionally, that the network side device determines the to-be-retained or to-be-discarded measurement gap in the measurement gaps for different features of the terminal based on the first conflict resolution in the case in which the measurement gaps for different features of the terminal conflict in time domain includes:
if different measurement gaps for a target feature of the terminal are configured to use a second conflict resolution, the network side device ignores the second conflict resolution configured for different measurement gaps for the target feature; or
if different measurement gaps for a target feature of the terminal are configured to use a second conflict resolution, the network side device assumes that the second conflict resolution configured for different measurement gaps for the target feature is effective, where
the target feature is a part or all of features of the terminal.

In this embodiment of this application, optionally, if the network side device assumes that the second conflict resolution configured for different measurement gaps for the target feature is effective, the method further includes:
if priorities of different measurement gaps for a target feature are different, and a priority of at least one measurement gap for the target feature is a highest priority, determining the to-be-retained or to-be-discarded measurement gap in different measurement gaps for the target feature based on the second conflict resolution; or
if priorities of different measurement gaps for a target feature are the same, and the priorities of the measurement gaps for the target feature are a highest priority, determining the to-be-retained or to-be-discarded measurement gap in different measurement gaps for the target feature based on the second conflict resolution; or
if priorities of all measurement gaps for a target feature are not a highest priority, discarding or skipping retaining all the measurement gaps for the target feature.

In this embodiment of this application, optionally, the second conflict resolution is different from the first conflict resolution.

In this embodiment of this application, optionally, the second conflict resolution is: in a case in which different measurement gaps for the target feature conflict in time domain, retaining different measurement gaps for the target feature that conflict in time domain.

In this embodiment of this application, optionally, the measurement gap determining method further includes:
the network side device determines a conflict resolution used for different measurement gaps for the target feature, where
the conflict resolution is the first conflict resolution or the second conflict resolution.

In this embodiment of this application, optionally, that the network side device determines the conflict resolution used for different measurement gaps for the target feature includes:
the network side device receives second indication information reported by the terminal, where the second indication information indicates a conflict resolution suggested by the terminal to be used for different measurement gaps for the target feature; and
the network side device determines, based on the second indication information, the conflict resolution used for different measurement gaps for the target feature; or
the network side device receives capability indication information reported by the terminal, where the capability indication information includes indication information indicating whether the terminal has a target capability; and
the network side device determines, based on the target capability of the terminal, the conflict resolution used for the target feature; or
the network side device configures the conflict resolution for different measurement gaps for the target feature of the terminal; or
if different measurement gaps for the target feature have a same priority, the network side device determines to use the second conflict resolution for different measurement gaps for the target feature, where
the conflict resolution is the first conflict resolution or the second conflict resolution.

In this embodiment of this application, optionally, after the network side device determines, based on the target capability of the terminal, the conflict resolution used for the target feature, the method further includes: The network side device sends first indication information to the terminal, where the first indication information indicates the conflict resolution used for different measurement gaps for the target feature.

In this embodiment of this application, optionally, after the network side device configures the conflict resolution for different measurement gaps for the target feature of the terminal, the method further includes: The network side device sends configuration information to the terminal, where the configuration information indicates the conflict resolution configured by the network side device for different measurement gaps for the target feature of the terminal.

The following describes the measurement gap determining method of this application by using examples with reference to specific application scenarios.

### Implementation 1 of this application

In this embodiment, in a case in which measurement gaps for different features of a terminal conflict in time domain, the terminal determines a to-be-retained or to-be-discarded measurement gap in the measurement gaps for different features of the terminal based on a priority-based resolution. If different measurement gaps for a target feature of the terminal are configured to use a coexistence-based resolution, the terminal ignores the coexistence-based resolution configured for different measurement gaps for the target feature.

In this embodiment, the terminal reports second indication information, where the second indication information indicates whether the terminal suggests to use the coexistence-based resolution for different measurement gaps for the target feature. The terminal may report the second indication information when applying for a measurement gap for the target feature (for example, an MUSIM). In this embodiment of this application, an identification symbol or an identification bit or an indication symbol or an indication bit may be added to signaling in the related technology, to carry the second indication information.

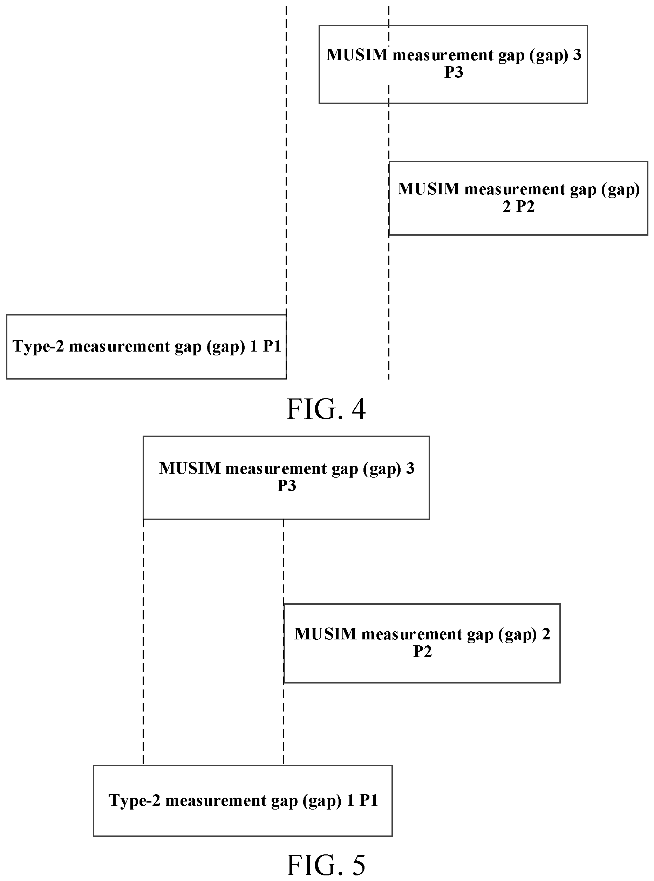

In this embodiment, as shown in FIG. 4 and FIG. 5, a gap 2 and a gap 3 are measurement gaps allocated by a network to an MUSIM feature. Priorities of the gap 2 and the gap 3 are respectively P2 and P3. A gap 1 is a measurement gap allocated by the network to type-2 measurement of the terminal. A priority of the gap 1 is P1. P1≠P2≠P3.

As shown in FIG. 4, the gap 3 and the gap 2 for the MUSIM feature conflict, both the gap 2 and the gap 3 do not conflict with the gap 1, and the gap 1 is retained. In this case, both the gap 2 and the gap 3 are measurement gaps for the MUSIM feature, and a resolution to a conflict between measurement gaps for the MUSIM feature is the coexistence-based resolution. In this case, the gap 2 and the gap 3 are also retained.

As shown in FIG. 5, both the gap 2 and the gap 3 for the MUSIM feature conflict with the measurement gap 1 for type-2 measurement. Based on the priority-based resolution between different features, only a gap with a highest priority is retained. For example, if P3>P2>P1, only the gap 3 is retained, and the gap 2 is no longer retained. In other words, the coexistence-based resolution between the gap 2 and the gap 3 is ignored or covered by the priority-based resolution.

### Implementation 2 of this application

In this embodiment, in a case in which measurement gaps for different features of a terminal conflict in time domain, the terminal determines a to-be-retained or to-be-discarded measurement gap in the measurement gaps for different features of the terminal based on a priority-based resolution. If different measurement gaps for a target feature of the terminal are configured to use a coexistence-based resolution, the terminal assumes that the coexistence-based resolution configured for different measurement gaps for the target feature is effective.

In this embodiment, the terminal reports second indication information (one bit or several bits), where the second indication information indicates whether the terminal suggests to use the coexistence-based resolution for different measurement gaps for the target feature. The terminal may report the second indication information when applying for a measurement gap for the target feature (for example, an MUSIM). In this embodiment of this application, an identification symbol or an identification bit or an indication symbol or an indication bit may be added to signaling in the related technology, to carry the second indication information.

The examples in FIG. 4 and FIG. 5 are still used for description.

As shown in FIG. 4, a gap 3 and a gap 2 for an MUSIM feature conflict, both the gap 2 and the gap 3 do not conflict with a gap 1, and the gap 1 is retained. In this case, both the gap 2 and the gap 3 are measurement gaps for the MUSIM feature, and a resolution to a conflict between measurement gaps for the MUSIM feature is the coexistence-based resolution. In this case, the gap 2 and the gap 3 are also retained.

As shown in FIG. 5, both the gap 2 and the gap 3 for the MUSIM feature conflict with the measurement gap 1 for type-2 measurement. If it is assumed that the coexistence-based resolution for the gap 2 and the gap 3 is effective, priority comparison is performed only between the gap 1 and the gap 2 or the gap 3. For example, when P1<P2 (in this case, P1>P3 or P1<P3) or P1<P3 (in this case, P1>P2 or P1<P2), the gap 1 is discarded, and both the gap 2 and the gap 3 are retained. Only when P1>P2 and P1>P3, the gap 1 is retained, and the gap 2 and the gap 3 are discarded.

### Implementation 3 of this application

In this embodiment, in a case in which measurement gaps for different features of a terminal conflict in time domain, the terminal determines a to-be-retained or to-be-discarded measurement gap in the measurement gaps for different features of the terminal based on a priority-based resolution. If different measurement gaps for a target feature of the terminal are configured to use a coexistence-based resolution, the terminal assumes that the coexistence-based resolution configured for different measurement gaps for the target feature is effective.

In this embodiment, if different measurement gaps for the target feature have a same priority, the terminal determines to use the coexistence-based resolution for different measurement gaps for the target feature. In other words, whether to use the coexistence-based resolution for different measurement gaps for the target feature depends on whether different measurement gaps for the target feature have the same priority. If different measurement gaps for the target feature have the same priority, the terminal determines to use the coexistence-based resolution for different measurement gaps for the target feature; or if different measurement gaps for the target feature do not have the same priority, the terminal determines not to use the coexistence-based resolution for different measurement gaps for the target feature.

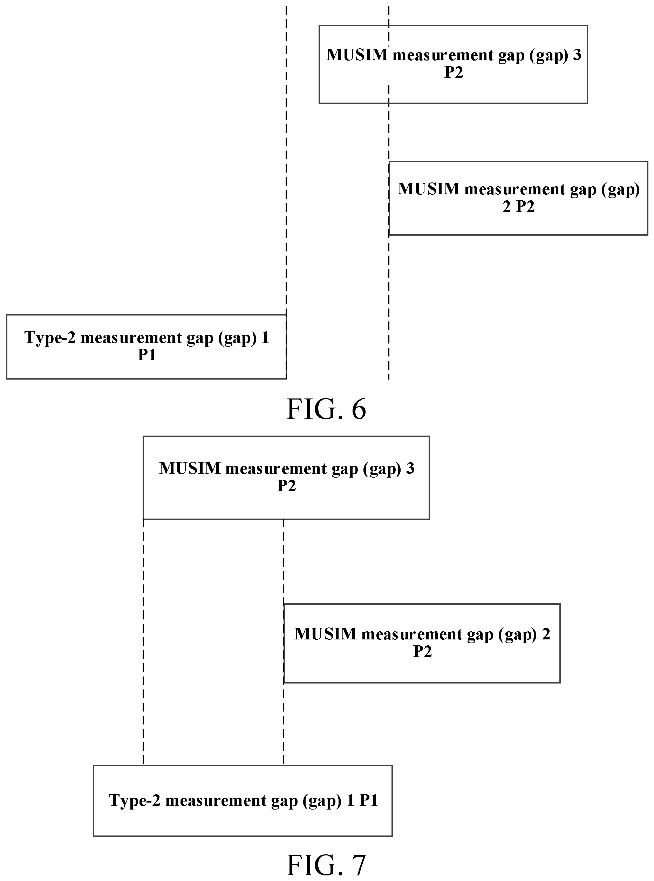

In this embodiment, as shown in FIG. 6 and FIG. 7, a gap 2 and a gap 3 are measurement gaps allocated by a network to an MUSIM feature. Priorities of the gap 2 and the gap 3 are the same, and both are P2. A gap 1 is a measurement gap allocated by the network to type-2 measurement of the terminal. A priority of the gap 1 is P1. P1≠P2.

As shown in FIG. 6, the gap 3 and the gap 2 for the MUSIM feature have the same priority. In this case, it is determined that a conflict resolution for the gap 2 and the gap 3 is the coexistence-based resolution, both the gap 2 and the gap 3 do not conflict with the gap 1, and the gap 1 is retained. Although the gap 2 and the gap 3 conflict, both the gap 2 and the gap 3 are retained based on the coexistence-based resolution.

As shown in FIG. 7, both the gap 2 and the gap 3 for the MUSIM feature conflict with the measurement gap 1 for type-2 measurement. If P1>P2, the gap 1 is retained, and the gap 2 and the gap 3 are discarded. If P1<P2, both the gap 2 and the gap 3 are retained based on the coexistence-based resolution, and the gap 1 is discarded.

### Implementation 4 of this application

In this embodiment, a terminal reports second indication information (one bit or several bits), where the second indication information indicates whether the terminal suggests to use a coexistence-based resolution for different measurement gaps for a target feature. The terminal may report the second indication information when applying for a measurement gap for the target feature (for example, an MUSIM). In this embodiment of this application, an identification symbol or an identification bit or an indication symbol or an indication bit may be added to signaling in the related technology, to carry the second indication information.

For the MUSIM feature, the terminal may report the second indication information by using the following method.

For example, in R17, the terminal uses the following signaling when applying for an MUSIM gap from a network:

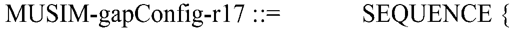

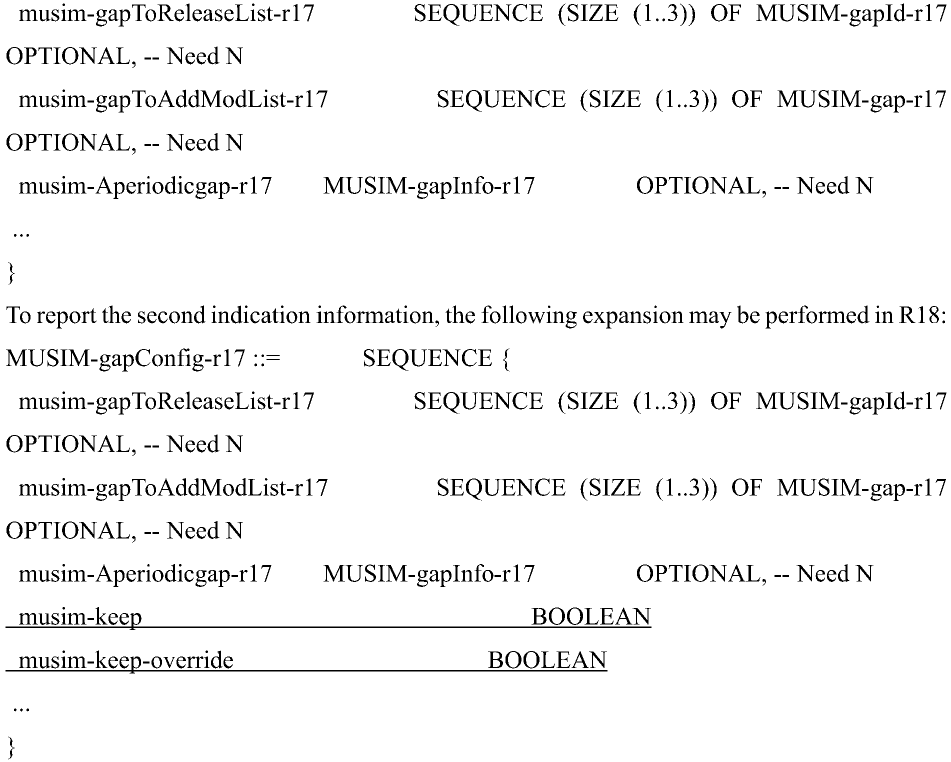

musim-keep added may indicate whether to use the coexistence-based resolution when MUSIM gaps conflict in time domain. If the coexistence-based resolution is not used, a default conflict resolution is a priority-based resolution.

MUSIM-keep-overlap added indicates whether the coexistence-based resolution applied to the MUSIM feature is still effective or ineffective when measurement gaps for different features conflict in time domain if the coexistence-based resolution is used for a conflict between the MUSIM gaps.

When whether to use the coexistence-based resolution is configured by the network, for the target feature, when configuring the measurement gap for the target feature, the network may use configuration signaling (one bit or a plurality of bits) to indicate to use the coexistence-based resolution for a conflict between the measurement gaps for the target feature. Specifically, the network may directly configure musim-keep or musim-keep-override to the terminal in the signaling.

### Implementation 5 of this application

In this embodiment, whether to use a coexistence-based resolution when different measurement gaps for a target feature conflict in time domain is determined by a capability of a terminal. The terminal may report a target capability to indicate to use the coexistence-based resolution. In this case, (1) a network and the terminal may default to use the coexistence-based resolution when different measurement gaps for the target feature conflict in time domain, or (2) the network further indicates, after receiving the target capability of the terminal, whether to use the coexistence-based resolution for the target feature when different measurement gaps for the target feature conflict in time domain.

The terminal may report the capability in the following manner:

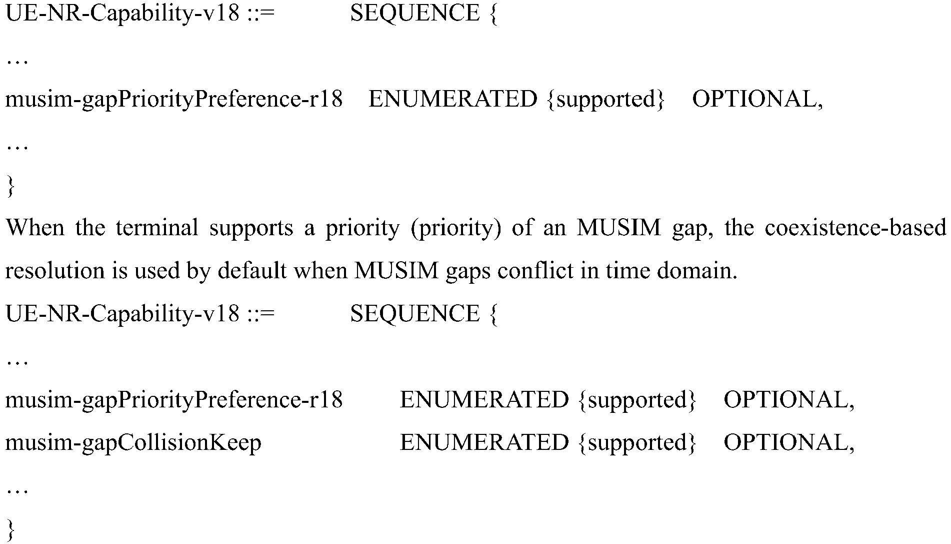

It can be learned that musim-gapCollisionKeep is introduced to the foregoing code, to indicate to use the coexistence-based resolution when the MUSIM gaps conflict in time domain.

The measurement gap determining method provided in embodiments of this application may be performed by a measurement gap determining apparatus. In embodiments of this application, an example in which the measurement gap determining apparatus performs the measurement gap determining method is used to describe the measurement gap determining apparatus provided in embodiments of this application.

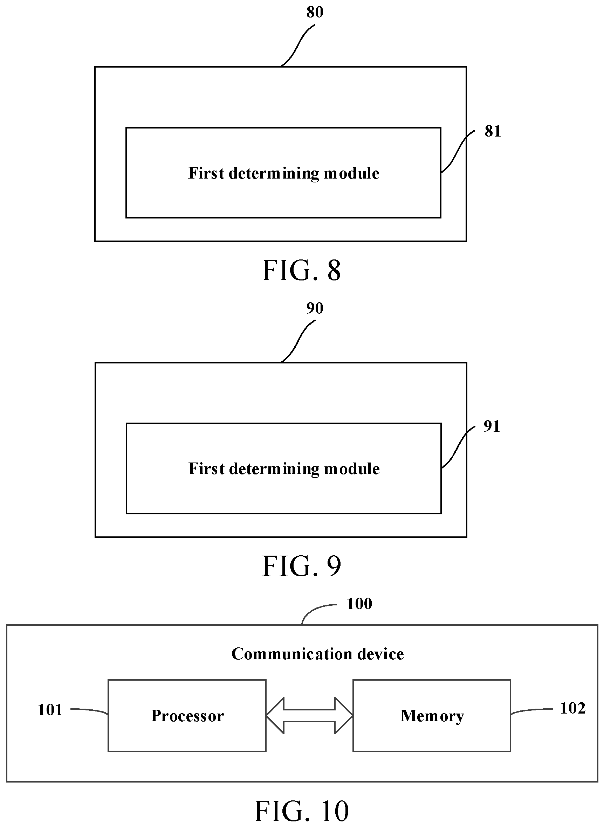

Refer to FIG. 8. An embodiment of this application further provides a measurement gap determining apparatus 80. The measurement gap determining apparatus 80 is applied to a terminal, and includes:
a first determining module 81, configured to determine a to-be-retained or to-be-discarded measurement gap in measurement gaps for different features of the terminal based on a first conflict resolution in a case in which the measurement gaps for different features of the terminal conflict in time domain.

The first conflict resolution is determining, based on priorities of the measurement gaps, the to-be-retained or to-be-discarded measurement gap in the measurement gaps that conflict in time domain.

According to this embodiment of this application, in the case in which the measurement gaps for different features of the terminal conflict in time domain, the to-be-retained or to-be-discarded measurement gap in the measurement gaps that conflict in time domain is determined based on the priorities of the measurement gaps, so that the terminal can determine which measurement gap to retain and which measurement gap to discard.

Optionally, the measurement gap determining apparatus 80 further includes:
a second determining module, configured to determine, by the terminal, the to-be-retained or to-be-discarded measurement gap in different measurement gaps for a target feature based on the first conflict resolution or a second conflict resolution in a case in which the measurement gaps for different features of the terminal do not conflict in time domain but different measurement gaps for the target feature conflict in time domain, where the target feature is a part or all of features of the terminal.

Optionally, the first determining module 81 is configured to: if different measurement gaps for a target feature of the terminal are configured to use a second conflict resolution, ignore the second conflict resolution configured for different measurement gaps for the target feature; or
the first determining module 81 is configured to: if different measurement gaps for a target feature of the terminal are configured to use a second conflict resolution, assume that the second conflict resolution configured for different measurement gaps for the target feature is effective, where
the target feature is a part or all of features of the terminal.

Optionally, if the terminal assumes that the second conflict resolution configured for different measurement gaps for the target feature is effective, the measurement gap determining apparatus 80 further includes:
a third determining module, configured to: if priorities of different measurement gaps for a target feature are different, and a priority of at least one measurement gap for the target feature is a highest priority, determine the to-be-retained or to-be-discarded measurement gap in different measurement gaps for the target feature based on the second conflict resolution; or
a fourth determining module, configured to: if priorities of different measurement gaps for a target feature are the same, and the priorities of the measurement gaps for the target feature are a highest priority, determine the to-be-retained or to-be-discarded measurement gap in different measurement gaps for the target feature based on the second conflict resolution; or
a fifth determining module, configured to: if priorities of all measurement gaps for a target feature are not a highest priority, discard or skip retaining all the measurement gaps for the target feature.

Optionally, the second conflict resolution is: in a case in which different measurement gaps for the target feature conflict in time domain, retaining different measurement gaps for the target feature that conflict in time domain.

Optionally, the measurement gap determining apparatus 80 further includes:
a sixth determining module, configured to determine a conflict resolution used for different measurement gaps for the target feature, where the conflict resolution is the first conflict resolution or the second conflict resolution.

Optionally, the sixth determining module is configured to determine, based on a target capability of the terminal, the conflict resolution used for the target feature; or
the sixth determining module is configured to: receive first indication information sent by a network side device, where the first indication information indicates the conflict resolution used for different measurement gaps for the target feature, and the conflict resolution used for different measurement gaps for the target feature is determined by the network side device based on a target capability of the terminal; and determine, based on the first indication information, the conflict resolution used for the target feature; or
the sixth determining module is configured to: receive configuration information sent by a network side device, where the configuration information indicates the conflict resolution configured by the network side device for different measurement gaps for the target feature of the terminal; and determine, based on the configuration information, the conflict resolution used for the target feature; or
the sixth determining module is configured to: if different measurement gaps for the target feature have a same priority, determine to use the second conflict resolution for different measurement gaps for the target feature.

Optionally, the measurement gap determining apparatus 80 further includes:
a first sending module, configured to report second indication information, where the second indication information indicates a conflict resolution suggested by the terminal to be used for different measurement gaps for the target feature.

Optionally, the measurement gap determining apparatus 80 further includes:
a second sending module, configured to report capability indication information, where the capability indication information includes indication information indicating whether the terminal has the target capability.

The measurement gap determining apparatus in this embodiment of this application may be an electronic device, for example, an electronic device having an operating system, or a component in an electronic device, for example, an integrated circuit or a chip. The electronic device may be a terminal, or may be another device other than a terminal. For example, the terminal may include but is not limited to the types of the terminal 11 listed above, and the another device may be a server, a network attached storage (Network Attached Storage, NAS), or the like. This is not specifically limited in embodiments of this application.

The measurement gap determining apparatus provided in this embodiment of this application can implement processes implemented in the method embodiment in FIG. 2, with the same technical effects achieved. To avoid repetitions, details are not described herein again.

Refer to FIG. 9. An embodiment of this application provides a measurement gap determining apparatus 90, applied to a network side device and including:
a first determining module 91, configured to determine a to-be-retained or to-be-discarded measurement gap in measurement gaps for different features of a terminal based on a first conflict resolution in a case in which the measurement gaps for different features of the terminal conflict in time domain.

The first conflict resolution is determining, based on priorities of the measurement gaps, the to-be-retained or to-be-discarded measurement gap in the measurement gaps that conflict in time domain.

According to this embodiment of this application, in the case in which the measurement gaps for different features of the terminal conflict in time domain, the to-be-retained or to-be-discarded measurement gap in the measurement gaps that conflict in time domain is determined based on the priorities of the measurement gaps, so that a network side can determine which measurement gap to retain and which measurement gap to discard.

Optionally, the measurement gap determining apparatus 90 further includes:
a second determining module, configured to determine the to-be-retained or to-be-discarded measurement gap in different measurement gaps for a target feature based on the first conflict resolution or a second conflict resolution in a case in which the measurement gaps for different features of the terminal do not conflict in time domain but different measurement gaps for the target feature conflict in time domain, where the target feature is a part or all of features of the terminal.

Optionally, the first determining module 91 is configured to: if different measurement gaps for a target feature of the terminal are configured to use a second conflict resolution, ignore the second conflict resolution configured for different measurement gaps for the target feature; or
optionally, the first determining module 91 is configured to: if different measurement gaps for a target feature of the terminal are configured to use a second conflict resolution, assume that the second conflict resolution configured for different measurement gaps for the target feature is effective, where
the target feature is a part or all of features of the terminal.

Optionally, if the network side device assumes that the second conflict resolution configured for different measurement gaps for the target feature is effective, the measurement gap determining apparatus 90 further includes:
a third determining module, configured to: if priorities of different measurement gaps for a target feature are different, and a priority of at least one measurement gap for the target feature is a highest priority, determine the to-be-retained or to-be-discarded measurement gap in different measurement gaps for the target feature based on the second conflict resolution; or
a fourth determining module, configured to: if priorities of different measurement gaps for a target feature are the same, and the priorities of the measurement gaps for the target feature are a highest priority, determine the to-be-retained or to-be-discarded measurement gap in different measurement gaps for the target feature based on the second conflict resolution; or
a fifth determining module, configured to: if priorities of all measurement gaps for a target feature are not a highest priority, discard or skip retaining all the measurement gaps for the target feature.

Optionally, the second conflict resolution is: in a case in which different measurement gaps for the target feature conflict in time domain, retaining different measurement gaps for the target feature that conflict in time domain.

Optionally, the measurement gap determining apparatus 90 further includes:
a sixth determining module, configured to determine a conflict resolution used for different measurement gaps for the target feature, where the conflict resolution is the first conflict resolution or the second conflict resolution.

Optionally, the sixth determining module is configured to: receive second indication information reported by the terminal, where the second indication information indicates a conflict resolution suggested by the terminal to be used for different measurement gaps for the target feature; and determine, based on the second indication information, the conflict resolution used for different measurement gaps for the target feature; or
the sixth determining module is configured to: receive capability indication information reported by the terminal, where the capability indication information includes indication information indicating whether the terminal has a target capability; and determine, based on the target capability of the terminal, the conflict resolution used for the target feature; or
the sixth determining module is configured to configure the conflict resolution for different measurement gaps for the target feature of the terminal; or
the sixth determining module is configured to: if different measurement gaps for the target feature have a same priority, determine to use the second conflict resolution for different measurement gaps for the target feature, where
the conflict resolution is the first conflict resolution or the second conflict resolution.

Optionally, the measurement gap determining apparatus 90 further includes:
a first sending module, configured to send first indication information to the terminal, where the first indication information indicates the conflict resolution used for different measurement gaps for the target feature.

Optionally, the measurement gap determining apparatus 90 further includes:
a second sending module, configured to send configuration information to the terminal, where the configuration information indicates the conflict resolution configured by the network side device for different measurement gaps for the target feature of the terminal.

The measurement gap determining apparatus in this embodiment of this application may be an electronic device, for example, an electronic device having an operating system, or a component in an electronic device, for example, an integrated circuit or a chip.

The measurement gap determining apparatus provided in this embodiment of this application can implement processes implemented in the method embodiment in FIG. 3, with the same technical effects achieved. To avoid repetitions, details are not described herein again.

As shown in FIG. 10, an embodiment of this application further provides a communication device 100, including a processor 101 and a memory 102. The memory 102 stores a program or instructions executable on the processor 101. For example, when the communication device 100 is a terminal, the program or the instructions, when executed by the processor 101, cause the steps in the embodiment of the measurement gap determining method performed by the terminal to be implemented, with the same technical effects achieved. When the communication device 100 is a network side device, the program or the instructions, when executed by the processor 101, cause the steps in the embodiment of the measurement gap determining method performed by the network side device to be implemented, with the same technical effects achieved. To avoid repetitions, details are not described herein again.

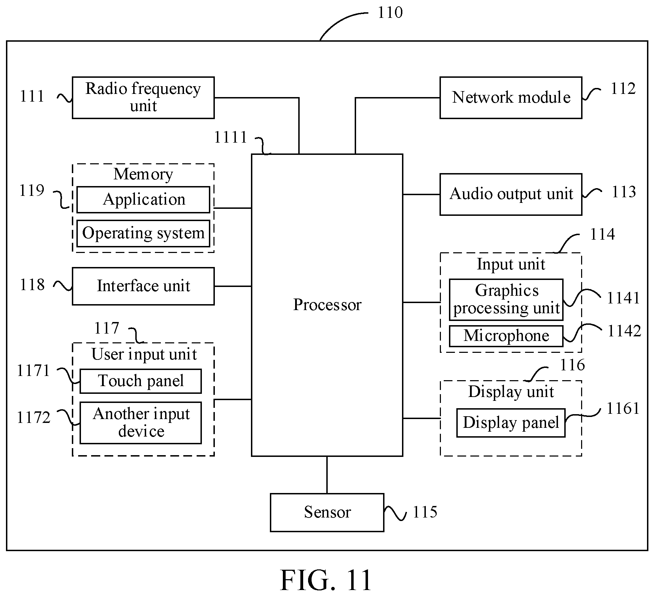

An embodiment of this application further provides a terminal, including a processor and a communication interface. The communication interface is coupled to the processor. The processor is configured to run a program or instructions, to implement the steps in the method embodiment shown in FIG. 2. The terminal embodiment corresponds to the method embodiment for a terminal side, and all the implementation processes and implementations in the method embodiment are applicable to the terminal embodiment, with the same technical effects achieved. Specifically, FIG. 11 is a diagram of a hardware structure of a terminal for implementing an embodiment of this application.

The terminal 110 includes but is not limited to at least a part of components such as a radio frequency unit 111, a network module 112, an audio output unit 113, an input unit 114, a sensor 115, a display unit 116, a user input unit 117, an interface unit 118, a memory 119, and a processor 1111.

It can be understood by a person skilled in the art that the terminal 110 may further include a power supply (for example, a battery) supplying power to the components. The power supply may be logically connected to the processor 1111 via a power management system, so that functions such as charge and discharge management and power consumption management are implemented via the power management system. The structure of the terminal shown in FIG. 11 does not constitute any limitation on the terminal, and the terminal may include more or fewer components than shown in the figure, combine some of the components, or have different arrangements of the components. Details are not described herein again.

It should be understood that in this embodiment of this application, the input unit 114 may include a graphics processing unit (Graphics Processing Unit, GPU) 1141 and a microphone 1142. The graphics processing unit 1141 processes image data of a static picture or a video that is obtained by an image capture apparatus (for example, a camera) in a video capture mode or an image capture mode. The display unit 116 may include a display panel 1161. The display panel 1161 may be configured in a form of a liquid crystal display, an organic light-emitting diode, or the like. The user input unit 117 includes at least one of a touch panel 1171 and another input device 1172. The touch panel 1171 is also referred to as a touchscreen. The touch panel 1171 may include two parts: a touch detection apparatus and a touch controller. The another input device 1172 may include but is not limited to a physical keyboard, a function button (for example, a volume control button or a power on/off button), a trackball, a mouse, and a joystick. Details are not described herein again.

In this embodiment of this application, after receiving downlink data from a network side device, the radio frequency unit 111 may transmit the data to the processor 1111 for processing. In addition, the radio frequency unit 111 may send uplink data to the network side device. Generally, the radio frequency unit 111 includes but is not limited to an antenna, an amplifier, a transceiver, a coupler, a low noise amplifier, a duplexer, and the like.

The memory 119 may be configured to store a software program or instructions and various data. The memory 119 may mainly include a first storage area storing the program or the instructions and a data storage area storing the data. The first storage area may store an operating system, an application or instructions required for at least one function (for example, a sound play function and an image play function), and the like. In addition, the memory 119 may include a volatile memory or a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchlink dynamic random access memory (Synchlink DRAM, SLDRAM), and a direct rambus random access memory (Direct Rambus RAM, DR RAM). The memory 119 in this embodiment of this application includes but is not limited to these and any other suitable types of memories.

The processor 1111 may include one or more processing units. Optionally, the processor 1111 integrates an application processor and a modem processor. The application processor mainly processes operations involving an operating system, a user interface, an application, and the like. The modem processor mainly processes a wireless communication signal, and is, for example, a baseband processor. It may be understood that the modem processor may alternatively not be integrated into the processor 1111.

The processor 1111 is configured to determine, by the terminal, a to-be-retained or to-be-discarded measurement gap in measurement gaps for different features of the terminal based on a first conflict resolution in a case in which the measurement gaps for different features of the terminal conflict in time domain, where the first conflict resolution is determining, based on priorities of the measurement gaps, the to-be-retained or to-be-discarded measurement gap in the measurement gaps that conflict in time domain.

According to this embodiment of this application, in the case in which the measurement gaps for different features of the terminal conflict in time domain, the to-be-retained or to-be-discarded measurement gap in the measurement gaps that conflict in time domain is determined based on the priorities of the measurement gaps, so that the terminal can determine which measurement gap to retain and which measurement gap to discard.

It may be understood that for implementation processes of the implementations in this embodiment, refer to the related descriptions of the method of the measurement gap determining method performed by the terminal, with the same or corresponding technical effects achieved. To avoid repetitions, details are not described herein again.

An embodiment of this application further provides a network side device, including a processor and a communication interface. The communication interface is coupled to the processor. The processor is configured to run a program or instructions, to implement the steps in the method embodiment shown in FIG. 3. The network side device embodiment corresponds to the method embodiment for the network side device, and all the implementation processes and implementations in the method embodiment are applicable to the network side device embodiment, with the same technical effects achieved.

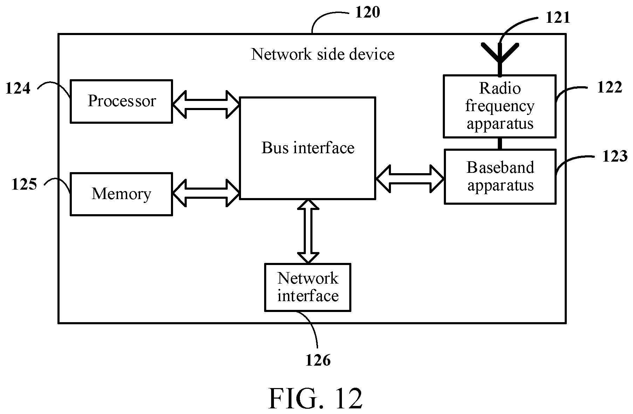

Specifically, an embodiment of this application further provides a network side device. As shown in FIG. 12, the network side device 1200 includes an antenna 121, a radio frequency apparatus 122, a baseband apparatus 123, a processor 124, and a memory 125. The antenna 121 is connected to the radio frequency apparatus 122. In an uplink direction, the radio frequency apparatus 122 receives information via the antenna 121, and sends the received information to the baseband apparatus 123 for processing. In a downlink direction, the baseband apparatus 123 processes to-be-sent information, and sends the information to the radio frequency apparatus 122; and the radio frequency apparatus 122 processes the received information and then sends the information out via the antenna 121.

The method performed by the network side device in the foregoing embodiment may be implemented in the baseband apparatus 123, and the baseband apparatus 123 includes a baseband processor.

The baseband apparatus 123 may include, for example, at least one baseband board, where a plurality of chips are disposed on the baseband board. As shown in FIG. 12, one of the chips, for example, the baseband processor, is connected to the memory 125 through a bus interface, to invoke a program in the memory 125 to perform the operation of the network side device shown in the foregoing method embodiment.

The network side device may further include a network interface 126. The interface is, for example, a common public radio interface (Common Public Radio Interface, CPRI).

Specifically, the network side device 120 in this embodiment of this application further includes instructions or a program stored in the memory 125 and executable on the processor 124. The processor 124 invokes the instructions or the program in the memory 125 to perform the method performed by the modules shown in FIG. 9, with the same technical effects achieved. To avoid repetitions, details are not described herein again.

An embodiment of this application further provides a readable storage medium. The readable storage medium stores a program or instructions. When the program or the instructions are executed by a processor, the processes in the foregoing measurement gap determining method embodiment are implemented, with the same technical effects achieved. To avoid repetitions, details are not described herein again.

The processor is the processor in the terminal described in the foregoing embodiment. The readable storage medium includes a computer-readable storage medium, for example, a computer read-only memory ROM, a random access memory RAM, a magnetic disk, or an optical disc. In some examples, the readable storage medium may be a non-transitory readable storage medium.

An embodiment of this application further provides a chip. The chip includes a processor and a communication interface. The communication interface is coupled to the processor. The processor is configured to run a program or instructions to implement the processes in the foregoing measurement gap determining method embodiment, with the same technical effects achieved. To avoid repetitions, details are not described herein again.

It should be understood that the chip in this embodiment of this application may also be referred to as a system-level chip, a system chip, a chip system, a system on chip, or the like.

An embodiment of this application further provides a computer program/program product. The computer program/program product is stored in a storage medium. The computer program/program product is executed by at least one processor to implement the processes in the foregoing measurement gap determining method embodiment, with the same technical effects achieved. To avoid repetitions, details are not described herein again.

An embodiment of this application further provides a communication system, including a terminal and a network side device. The terminal may be configured to perform the steps of the measurement gap determining method performed by the terminal. The network side device may be configured to perform the steps of the measurement gap determining method performed by the network side device.

It should be noted that in this specification, the term "comprise", "include", or any other variant thereof is intended to cover a non-exclusive inclusion, so that a process, a method, an article, or an apparatus that includes a list of elements not only includes those elements but also includes other elements that are not expressly listed, or further includes elements inherent to such process, method, article, or apparatus. In absence of more constraints, an element preceded by "including a/an..." does not preclude existence of other identical elements in the process, method, article, or apparatus that includes the element. In addition, it should be noted that the scope of the method and apparatus in the implementations of this application is not limited to performing the functions in the order shown or discussed, but may also include performing the functions in a substantially simultaneous manner or in a reverse order depending on the functions involved. For example, the described method may be performed in an order different from that described, and various steps may be added, omitted, or combined. In addition, features described with reference to some examples may be combined in other examples.

According to the descriptions of the foregoing implementations, a person skilled in the art can clearly understand that the method in the foregoing embodiments may be implemented by a computer software product in addition to a necessary universal hardware platform or by hardware only. The computer software product is stored in a storage medium (for example, a ROM, a RAM, a magnetic disk, or an optical disc), and includes several instructions for indicating a terminal or a network side device to perform the method described in embodiments of this application.

The foregoing describes embodiments of this application with reference to the accompanying drawings. However, this application is not limited to these specific implementations. The specific implementations are merely illustrative rather than restrictive. Inspired by this application, a person of ordinary skill in the art may develop many other implementations without departing from the principle of this application and the protection scope of the claims, and all such implementations fall within the protection scope of this application.

## Claims

1. A measurement gap determining method, comprising:
determining, by a terminal, a to-be-retained or to-be-discarded measurement gap in measurement gaps for different features of the terminal based on a first conflict resolution in a case in which the measurement gaps for different features of the terminal conflict in time domain, wherein
the first conflict resolution is determining, based on priorities of the measurement gaps, the to-be-retained or to-be-discarded measurement gap in the measurement gaps that conflict in time domain.

2. The method according to claim 1, further comprising:
determining, by the terminal, the to-be-retained or to-be-discarded measurement gap in different measurement gaps for a target feature based on the first conflict resolution or a second conflict resolution in a case in which the measurement gaps for different features of the terminal do not conflict in time domain but different measurement gaps for the target feature conflict in time domain, wherein the target feature is a part or all of features of the terminal.

3. The method according to claim 1, wherein determining, by the terminal, the to-be-retained or to-be-discarded measurement gap in the measurement gaps for different features of the terminal based on the first conflict resolution in the case in which the measurement gaps for different features of the terminal conflict in time domain comprises:
if different measurement gaps for a target feature of the terminal are configured to use a second conflict resolution, ignoring, by the terminal, the second conflict resolution configured for different measurement gaps for the target feature; or
if different measurement gaps for a target feature of the terminal are configured to use a second conflict resolution, assuming, by the terminal, that the second conflict resolution configured for different measurement gaps for the target feature is effective, wherein
the target feature is a part or all of features of the terminal.

4. The method according to claim 3, wherein if the terminal assumes that the second conflict resolution configured for different measurement gaps for the target feature is effective, the method further comprises:
if priorities of different measurement gaps for the target feature are different, and a priority of at least one measurement gap for the target feature is a highest priority, determining the to-be-retained or to-be-discarded measurement gap in different measurement gaps for the target feature based on the second conflict resolution; or
if priorities of different measurement gaps for the target feature are the same, and the priorities of the measurement gaps for the target feature are a highest priority, determining the to-be-retained or to-be-discarded measurement gap in different measurement gaps for the target feature based on the second conflict resolution; or
if priorities of all measurement gaps for the target feature are not a highest priority, discarding or skipping retaining all the measurement gaps for the target feature.

5. The method according to claim 2, 3, or 4, wherein the second conflict resolution is: in a case in which different measurement gaps for the target feature conflict in time domain, retaining different measurement gaps for the target feature that conflict in time domain.

6. The method according to claim 2, 3, or 4, further comprising:
determining, by the terminal, a conflict resolution used for different measurement gaps for the target feature, wherein
the conflict resolution is the first conflict resolution or the second conflict resolution.

7. The method according to claim 6, wherein determining, by the terminal, the conflict resolution used for different measurement gaps of the target feature comprises:
determining, by the terminal based on a target capability of the terminal, the conflict resolution used for the target feature; or
receiving, by the terminal, first indication information sent by a network side device, wherein the first indication information indicates the conflict resolution used for different measurement gaps for the target feature, and the conflict resolution used for different measurement gaps for the target feature is determined by the network side device based on a target capability of the terminal; and
determining, by the terminal based on the first indication information, the conflict resolution used for the target feature; or
receiving, by the terminal, configuration information sent by a network side device, wherein the configuration information indicates the conflict resolution configured by the network side device for different measurement gaps for the target feature of the terminal; and
determining, by the terminal based on the configuration information, the conflict resolution used for the target feature; or
if different measurement gaps for the target feature have a same priority, determining, by the terminal, to use the second conflict resolution for different measurement gaps for the target feature.

8. The method according to claim 7, further comprising:
reporting, by the terminal, second indication information, wherein the second indication information indicates a conflict resolution suggested by the terminal to be used for different measurement gaps for the target feature.

9. The method according to claim 7, wherein before receiving, by the terminal, the first indication information sent by the network side device, the method further comprises:
reporting, by the terminal, capability indication information, wherein the capability indication information comprises indication information indicating whether the terminal has the target capability.

10. A measurement gap determining method, comprising:
determining, by a network side device, a to-be-retained or to-be-discarded measurement gap in measurement gaps for different features of a terminal based on a first conflict resolution in a case in which the measurement gaps for different features of the terminal conflict in time domain, wherein
the first conflict resolution is determining, based on priorities of the measurement gaps, the to-be-retained or to-be-discarded measurement gap in the measurement gaps that conflict in time domain.

11. The method according to claim 10, further comprising:
determining, by the network side device, the to-be-retained or to-be-discarded measurement gap in different measurement gaps for a target feature based on the first conflict resolution or a second conflict resolution in a case in which the measurement gaps for different features of the terminal do not conflict in time domain but different measurement gaps for the target feature conflict in time domain, wherein the target feature is a part or all of features of the terminal.

12. The method according to claim 10, wherein determining, by the network side device, the to-be-retained or to-be-discarded measurement gap in the measurement gaps for different features of the terminal based on the first conflict resolution in the case in which the measurement gaps for different features of the terminal conflict in time domain comprises:
if different measurement gaps for a target feature of the terminal are configured to use a second conflict resolution, ignoring, by the network side device, the second conflict resolution configured for different measurement gaps for the target feature; or
if different measurement gaps for a target feature of the terminal are configured to use a second conflict resolution, assuming, by the network side device, that the second conflict resolution configured for different measurement gaps for the target feature is effective, wherein
the target feature is a part or all of features of the terminal.

13. The method according to claim 12, wherein if the network side device assumes that the second conflict resolution configured for different measurement gaps for the target feature is effective, the method further comprises:
if priorities of different measurement gaps for the target feature are different, and a priority of at least one measurement gap for the target feature is a highest priority, determining the to-be-retained or to-be-discarded measurement gap in different measurement gaps for the target feature based on the second conflict resolution; or
if priorities of different measurement gaps for the target feature are the same, and the priorities of the measurement gaps for the target feature are a highest priority, determining the to-be-retained or to-be-discarded measurement gap in different measurement gaps for the target feature based on the second conflict resolution; or
if priorities of all measurement gaps for the target feature are not a highest priority, discarding or skipping retaining all the measurement gaps for the target feature.

14. The method according to claim 11, 12, or 13, wherein the second conflict resolution is: in a case in which different measurement gaps for the target feature conflict in time domain, retaining different measurement gaps for the target feature that conflict in time domain.

15. The method according to claim 11, 12, or 13, further comprising:
determining, by the network side device, a conflict resolution used for different measurement gaps for the target feature, wherein
the conflict resolution is the first conflict resolution or the second conflict resolution.

16. The method according to claim 15, wherein determining, by the network side device, the conflict resolution used for different measurement gaps of the target feature comprises:
receiving, by the network side device, second indication information reported by the terminal, wherein the second indication information indicates a conflict resolution suggested by the terminal to be used for different measurement gaps for the target feature; and
determining, by the network side device based on the second indication information, the conflict resolution used for different measurement gaps for the target feature; or
receiving, by the network side device, capability indication information reported by the terminal, wherein the capability indication information comprises indication information indicating whether the terminal has a target capability; and
determining, by the network side device based on the target capability of the terminal, the conflict resolution used for the target feature; or
configuring, by the network side device, the conflict resolution for different measurement gaps for the target feature of the terminal; or
if different measurement gaps for the target feature have a same priority, determining, by the network side device, to use the second conflict resolution for different measurement gaps for the target feature, wherein
the conflict resolution is the first conflict resolution or the second conflict resolution.

17. The method according to claim 16, wherein after determining, by the network side device based on the target capability of the terminal, the conflict resolution used for the target feature, the method further comprises:
sending, by the network side device, first indication information to the terminal, wherein the first indication information indicates the conflict resolution used for different measurement gaps for the target feature.

18. The method according to claim 16, wherein after configuring, by the network side device, the conflict resolution for different measurement gaps for the target feature of the terminal, the method further comprises:
sending, by the network side device, configuration information to the terminal, wherein the configuration information indicates the conflict resolution configured by the network side device for different measurement gaps for the target feature of the terminal.

19. A measurement gap determining apparatus, comprising:
a first determining module, configured to determine a to-be-retained or to-be-discarded measurement gap in measurement gaps for different features of a terminal based on a first conflict resolution in a case in which the measurement gaps for different features of the terminal conflict in time domain, wherein
the first conflict resolution is determining, based on priorities of the measurement gaps, the to-be-retained or to-be-discarded measurement gap in the measurement gaps that conflict in time domain.

20. A terminal, comprising a processor and a memory, wherein the memory stores a program or instructions executable on the processor; and when the program or the instructions are executed by the processor, the steps of the measurement gap determining method according to any one of claims 1 to 9 are implemented.

21. A network side device, comprising a processor and a memory, wherein the memory stores a program or instructions executable on the processor; and when the program or the instructions are executed by the processor, the steps of the measurement gap determining method according to any one of claims 10 to 18 are implemented.

22. A readable storage medium, wherein the readable storage medium stores a program or instructions; and when the program or instructions are executed by a processor, the steps of the measurement gap determining method according to any one of claims 1 to 9 or the measurement gap determining method according to any one of claims 10 to 18 are implemented.
